# EUROPÄISCHE PATENTSCHRIFT

(11) **EP 1 826 153 B1**
(45) Veröffentlichungstag und Bekanntmachung des Hinweises auf die Patenterteilung: **15.10.2008**
(21) Anmeldenummer: 06120774.2
(22) Anmeldetag: 30.01.2006
(51) Int. Cl.: B65G 13/02, B61B 13/12, B65G 21/08

(54) **Containerbahn**
Container way
Chemin des conteneurs

(43) Veröffentlichungstag der Anmeldung: 29.08.2007
(62) Teilanmeldung aus: 06101006.2
(73) Patentinhaber: Grilli, Silvio, 3916 Mondercange (LU)
(72) Erfinder: Grilli, Silvio, 3916 Mondercange (LU)
(74) Vertreter: Lecomte, Didier

(56) Entgegenhaltungen:
- WO-A-94/27851
- DE-A1- 19 725 945
- NL-A- 7 408 031
- US-A- 283 947
- US-A- 1 198 605
- US-A- 3 735 710
- US-A- 3 903 807

## Beschreibung

### Technisches Gebiet

Die Erfindung bezieht sich auf Warentransport, insbesondere auf ein Verfahren und eine Vorrichtung zur Beförderung von Containern.

### Stand der Technik

Der Warentransport auf Autobahnen wächst weltweit und zwar in ungeheuren Mengen. Dadurch wird fortwährend nach neuen Transportmethoden geforscht und es bestehen auch schon sehr viele Pläne und Vorschläge zur Lösung dieses schwierigen Themas. Der jetzige Stand des Warentransports auf Autobahnen sitzt in einer Sackgasse. Das Verbreitern der Autobahnen kann nicht ins Unendliche ausgeführt werden und kostet Unmengen an Geld. Damit wäre das Problem trotzdem nicht gelöst, so dass es tatsächlich angebracht ist nach anderen Methoden zu suchen. Hieran haben wir uns auch beteiligt, mit folgenden drei Überlegungen:
1) Aus dem Bedarf heraus, Umweltfreundliche Energie einsetzen zu können, anstatt der ungeheuren Mengen an Dieseltreibstoff für den Warentransport auf den Autobahnen.
2) Um die immer problematischer werdenden, schwerfälligen Fernlaster so weit wie möglich von den Autobahnen zu entfernen.
3) Damit die Waren sicher, viel schneller umweltfreundlicher und billiger ans Ziel kommen.

Die Internationale Anmeldung WO 94/27851 A betrifft eine Verfahren und eine Containerbahn gemäss dem Oberbegriff des Anspruches 1 bzw. des Anspruches 3. Die Transportcontainer werden zum Transport entlang der Containerbahn auf fahrbare Untersätze mit Elektroantrieb gesetzt.

Die US-A-3,735,710 betrifft ein Transportsystem zum Transport von besonderen Fahrzeugen oder Fahrzeugzellen über elektrisch betriebene Antriebsräder, die einzeln, ohne Querverbindung, auf beiden Seiten der Transportbahn montiert sind.

### Erfindung

Die der Erfindung zugrunde liegende Aufgabe besteht darin, eine Lösung zu den oben angeführten Problemen anzubieten.

Die Erfindung betrifft ein Verfahren zum Aufbauen einer Containerbahn und zum Transport weltweit üblicher Container gemäß dem Anspruch 1 sowie eine Containerbahn gemäß dem Anspruch 3.

Die Spur der Container wird gegebenenfalls durch an der Containerbahn befestigte Führungsrollen geführt.

Mindestens ein Container gegebenenfalls wird über Stromabnehmer, die gegen am Dach oder seitwärts angebrachte elektrische Leitungen gleiten, mit Strom versorgt.

Der Rahmen weist gegebenenfalls einzelne, vorzugsweise durch Verbindungsplatten aneinander befestigte, vorzugsweise T-förmige Trägerelemente und Abstandhalter auf.

Mindestens eine der Antriebseinheiten weist eine Achse auf, auf der ein Antriebsrad sowie vorzugsweise ein elektrischer Motor angeordnet ist, der vorzugsweise an einer der Einschiebeplatten angeflanscht ist.

Optional sind die Antriebseinheiten derart ausgeführt, dass sie in eine erste oder in eine zweite um 180° umgedrehte Position eingebaut werden können.

Die Containerbahn kann Solarzellen aufweisen, die vorzugsweise auf dem Dach und/oder an den Seitenwänden der Containerbahn angeordnet sind, zur Stromversorgung der Antriebseinheiten.

Die Containerbahn kann aus zwei nebeneinander laufenden Fahrspuren bestehen, wobei vorzugsweise die eine in eine Richtung läuft und die andere in die entgegengesetzte Richtung läuft. Sie kann auch aus vier nebeneinander laufenden Fahrspuren bestehen, wobei zwei von denen in eine Richtung laufen und die zwei andern parallel in die entgegengesetzte Richtung laufen. Ein Wartungsweg kann in der Mitte zwischen den zwei bzw. vier Fahrspuren und/oder an der äusseren Seite einer jeweiligen äusseren Fahrspur vorgesehen sein.

Die Containerbahn wurde erfunden, zur meistmöglichen Entfernung der immer problematischer werdenden Fernlaster von den Autobahnen. Die Erfindung soll einen reibungslosen, sicheren und schnellen. Transport der Waren, ausschliesslich mit Containern tätigen.

Das Ganze beruht auf einer neuartigen Konstruktion die sowohl über die Autobahn, als auch selbständig über neues Gelände errichtet werden kann. Führt sie über neues Gelände, dann kann die Strecke möglichst günstig geführt werden, da diese ja im Gegensatz zur Autobahn noch festzulegen ist. Die Konstruktion besteht aus einer überdachten und mit Seitenwänden versehenen Strecke (Hallenartig), in der sich die Bahn befindet, welche sowohl auf Beton- als auch auf Stahlunterlagen montiert werden kann. Führt sie über die Autobahn, dann wird sie logischerweise auf Tragestützen gebaut und zwar mit ihrem unteren Ende so hoch, dass auf der Autobahn unter ihr, trotzdem immer noch Fernlaster und Busse fahren können. Andernfalls kann sie auf die gleiche Art, auf Pfeilern je nach Bedarf und Möglichkeit errichtet werden, oder ganz einfach mit ihrer Tragfläche auf die Erdoberfläche.

Die Containerbahn ist eine neuartige Transportform für Container. Sie besteht aus einer mit Rädern (Rollen) bestückten Konstruktion, auf denen die Container fortbewegt werden, anstatt mit Ferntastern. Sie kann auf ihrer ganzen Länge in einer Art Halle untergebracht werden, welche vollständig mit Solarzellen belegt ist, sowohl das Dach als auch die Seitenwänden und kann so ihren Strombedarf selbst produzieren. Gleichzeitig wäre sie somit total vor sämtlichen äusseren Einflüsse abgeschirmt, wie z.B. Witterung und Unbefugten. Zur Stromversorgung von Containern mit Kühlaggregaten werden diese eventuell mit hochklappbaren Stromabnehmern (oder ähnliches) ausgestattet indem sie den Strom z.B. aus einer Stromleitung beziehen. Diese kann unter dem Dach auf einer Höhe angebracht werden die es mindestens erlaubt, "High-Cube"-Container ( mit einer Höhe von 2,90m) darunter transportieren zu können. Diese Leitung kann aber auch anderswo, z.B. seitwärts angebracht werden. Wird mit den vielen Solarzellen Strom in Überfluss erzeugt, dann kann man diesen ins öffentliche Netz einspeisen, oder gegebenenfalls bei Bedarf wieder dem Netz entnehmen. Der Transport kann ununterbrochen vom Start- bis zum Zielort verlaufen, Tag und Nacht, ohne Rücksicht auf Feiertage und Witterung. Am Zielort angelangt, werden die Container z.B. über die Strasse zum Kunden gebracht und umgekehrt vom Kunden zur Containerbahn. Durch das Überdecken kann man sämtliches Niederschlagswasser auffangen und da es nicht verschmutzt und Streusalzfrei ist, in den öffentlichen Wasserhaushalt einspeisen. Der Warentransport mit Fernlastern sollte anfangs auf langen Strecken (und später nach Bedarf Etappenweise auch auf kürzeren Strecken) in die Containerbahn verlegt werden und von den Autobahnen, so weit wie möglich verschwinden.

Anstatt die Containerbahn über die Autobahn zu konstruieren, könnte man sie auch eigenständig über Land führen. Dies hätte dann den Verbrauch von zusätzlichem Land als Nachteil. Dadurch dass sie beliebig über ungenutztes Brachland geführt werden kann, würden aber die Vorteile dies grosszügig übertreffen, denn sie könnte im Gegenteil zur Autobahn viel gerader geführt und dadurch kürzer werden. Da sie weder angemessene Steigungen noch Gefälle oder Unwetter zu fürchten braucht, kann sie fast beliebig Berge und Bergketten empor und hinunterfahren, oder an den Hängen entlang umfahren und braucht so deutlich weniger Tunnels oder hohe Brücken. Das Bauverfahren wäre in diesem Fall auch einfacher.

### Zeichnungen

- Bild 1 zeigt eine bevorzugte Anordnung der Containerbahn.
- Bild 2 zeigt Konstruktionsdetails der Containerbahn.
- Bild 2A ist eine Draufsicht eines Teils der Containerbahn.
- Bild 3 stellt zwei Antriebseinheiten dar und zeigt, wie sie austauschbar sind.
- Bild 4 zeigt, wie die Antriebseinheiten an dem Rahmen der Containerbahn angebracht sind.
- Bild 5 zeigt das Funktionsprinzip der Containerbahn.
- Bild 6 zeigt weitere Details der Containerbahn.
- Bild 7 zeigt eine Platform, auf der ein Container zu transportieren ist.

### Ausführungsbeispiele der Erfindung

### Das prinzip der "Containerbahn"

Die Containerbahn besteht aus zwei nebeneinanderlaufenden Fahrspuren welche in die eine Richtung laufen und zwei Weitere welche parallel zu diesen in entgegengesetzte Richtung führen, genau wie die Autobahn. Diese Doppelstränge dienen ausschliesslich zur Beförderung von Containern. Da sich auf jedem Doppelstrang die linke Spur (in Fahrtrichtung) am äusseren Rand der Containerbahn befindet, würde diese sich am besten als Lauf-, Auf- und Ausfahrtspur eignen. Die rechte Spur hingegen, dient dann in diesem Fall nur als Überhol- und Ausweichspur bei Bedarf, z.B. bei eventuellen grösseren Reparaturen. Über die Mittelstreifen und die Ausweichstreifen der Autobahn werden diese Flächen entlang der Containerbahn als Fahrwege der Unterhaltsmannschaften genutzt. Neben den äusseren Fahrwege werden Werkstätten errichtet und damit die Ersatzteile nicht zu weit transportiert werden müssen, kommen in angemessenen Abständen die Ersatzteillager.

### Wie funktioniert die "Containerbahn" ?

Mit der Containerbahn stellen wir den Transport der Container praktisch auf den Kopf.

Das heisst: bislang wurden die Container über den Aufleger auf die Räder des Lastwagens durch dessen eigenen Motor befördert, indem die Lkw-Räder über die Strasse liefen. Die Container kommen nämlich anfangs auf Plattformen, an denen sie durch Drehverriegelungen (Twist-locks) befestigt sind und laufen über die feststehenden, sich drehenden Räder (Rollen) und somit haben wir, wie schon erwähnt, das Prinzip auf den Kopf gestellt. Danach sollten beim Bau von neuen Containern und im Laufe der Zeit auch die schon existierenden noch brauchbaren, nach und nach mit Laufflächen und Führungsflanken versehen werden und die Plattformen können dann nach und nach wieder aus dem Verkehr geholt werden. Für die Spurenhaltung der Container sorgen z.B. seitlich angebrachte Führungsrollen. Das viele überflüssige Mehrgewicht des Lastwagens musste stets und überall mitgeschleppt werden, was eine enorme Verschwendung an Material (Verschleiss) und vor allem von Kraftstoff mit sich brachte. Die Containerbahn dagegen ist sozusagen ein Gemeinschaftstransportmittel und trotzdem läuft jeder einzelne Container computergesteuert selbständig sein Ziel unaufhaltsam an. Mit ihr wird nur der Container transportiert und zwar ohne Treibstoff, sondern mit dem selbstproduzierten, oder (bei Bedarf) vom Netz entnommenen Strom. Der Verschleiss fällt natürlich auf die mechanischen, elektrischen und elektronischen Einrichtungen zurück, aber halten sich hier in Grenzen, unter anderem weil alle Austauchelemente standardisiert sind und das Ganze nicht den Witterungseinflüssen ausgesetzt ist. Auch fallen die Ausfallzeiten der Fernlaster während der Reparatur- und Wartungszeiten aus. Durch die Standardisierung gestaltet sich der Unterhalt viel einfacher als bei den Fernlastern, weil immer nur die gleichen Teile ausgetauscht werden, die schon überholt (gewartet) auf Lager auf ihren Einsatz (Austausch) mit wenigen Handgriffen warten. Unser Hauptanliegen besteht darin, dass wir einen möglichst unbehinderten kontinuirlichen Materialfluss erreichen wollen. Dies ist eine der wichtigsten Aufgaben der Containerbahn und zwar mit einem Höchstmass an Sicherheit. Deshalb müssen die Fahrspuren (Transportstränge) absolut menschenleer sein und nur bei Unfällen oder Reparaturarbeiten von den jeweiligen Mannschaften betreten werden, während der Transport auf diesem Streckenabschnitt auf der anderen Spur weiterläuft. Jedes Antriebsrad hat z.B. seinen eigenen Elektromotor und bildet so eine komplette Antriebseinheit. Diese Antriebseinheiten sind so angeordnet, dass wenn ein oder mehrere Elektromotoren oder Antriebsräder ausfallen, sich immer noch genügend intakte Antriebseinheiten unter dem kleinsten Container befinden, um ihn weiterzubefördern. Die defekte Antriebseinheit oder -einheiten werden dann kurzerhand entfernt und durch andere schon bereitstehende und in der Werkstatt überholte ersetzt. Diese und alle anderen anfallenden Wartungsarbeiten können problemlos ausgeführt werden, währenddem der Containertransport unbehelligt über die zweite Spur weiterläuft.

### Der Antrieb der "Containerbahn".

Die Antriebseinheiten der Containerbahn sind (wie im vorigen Artikel schon erwähnt) so angebracht, dass bei Ausfall von einer oder mehreren Antriebseinheiten gleichzeitig, sich unter dem kleinsten Container immer noch genügend funktionsfähige Antriebseinheiten befinden, um den Weitertransport zu gewährleisten. Die Antriebseinheiten werden nur bei Bedarf eingeschaltet. Ist kein Container in Anfahrt, dann stehen sie still. Nähert sich ein Container einer Antriebseinheit bis auf eine bestimmte Nähe, dann schaltet diese sich ein um schon in Fahrt zu sein, wenn der Container sie erreicht. Hat er sie mit seinem hinteren Ende überfahren, dann schaltet sie wieder ab und wartet auf den nächsten Einschaltbefehl. Dann die nächste Antriebseinheit und so weiter. Kommen die Container dicht genug hintereinander herangefahren, dann laufen die Antriebseinheiten ununterbrochen weiter. Da der ganze Versandprozess computergesteuert ist, werden die Weichen automatisch gestellt. Der Container ist intern jederzeit identifizierbar, nach aussen in höchstem Mass geschützt und kann während seiner Fahrt fortwährend verfolgt werden.

### Die konstruktion der "Containerbahn".

Führt die Containerbahn über die Autobahn, dann wird letztere dadurch nicht beeinträchtigt und sie bleibt voll funktionsfähig bestehen. Später wird sich feststellen lassen, ob man sie stellenweise zu Kosteneinsparungen zurückbauen kann, anstatt sie gemäss den heutigen immer wiederkehrenden Forderungen, wegen der kontinuierlichen Zunahme der Fernlaster sehr kostspielig zu verbreitern. Die Containerbahn ist dazu bestimmt soviel Fracht wie möglich von der Autobahn zu nehmen und das kann sie durchaus, denn sie hat ein enormes Aufnahmepotential, da die Container bei Bedarf, ähnlich wie die Wagen eines Zuges hintereinander laufen können ohne miteinander verbunden zu sein. Mittelstreifen und Seitenränder der Autobahn können zum einpflanzen der Stützpfeiler für die Containerbahn dienen, so dass keine weitere Oberfläche benötigt wird, abgesehen von Stellen an denen das Überfahren der Autobahn nicht möglich ist, wie z.B. Tunnels oder hohe Brücken. Bei Tunnels kann sie das Hindernis um- oder überfahren und bei hohe Brücken kann sie ins Tal hinunter und auf der anderen Seite wieder hoch fahren, um danach wieder über die Autobahn zu gelangen. Die Pfeiler und die Tragkonstruktion können nach Möglichkeit und Bedarf entweder aus Stahl (Stahlträger, Stahlplatten u.s.w.) oder aus Stahlbeton, oder anderen geeigneten Materialien errichtet werden. Die Pfeiler, die zu beiden Seiten und dem Mittelstreifen der Autobahn aus dem Boden herauswachsen, laufen weiter in die Höhe, bis sie sich am oberen Ende z.B. durch eine gewisse Schrägstellung miteinander verbinden. Dadurch bilden sie eine solide Einheit und indem diese Einheiten miteinander verbunden werden, dienen sie gleichzeitig als Dachauflage und Wandverkleidung. Das Dach und die gesamten Seitenflächen werden (soweit das möglich und erwünscht ist) ganz z.B. mit Hallenblechen verkleidet, an denen dann die Solarzellen angebracht werden können. An jedem mit Containern zu beliefernden Schwerpunkt werden Containerausfahrten errichtet, mit anschliessendem Auffang- bzw. Ab- und Aufladeplatz. Von hier aus werden die Container zum und vom Kunden gebracht. An jeder Abfahrtsrampe steht (so wie auf den Schiffcontainerhäfen) eine Röntgenanlage und jeder Container muss sie zur Vorsichtsmassnahme und zur Warenkontrolle vor seiner Reise durchfahren.

### Bild 1

Die Containerbahn besteht genau wie die Autobahn aus den zwei Doppelsträngen 1. Sie führen in entgegengesetzten Richtungen. Auf jedem Doppelstrang ist je eine Fahrspur 2 und eine Überholspur 3. An der Stelle des Mittelstreifens und der beiden Ausweichspuren der Autobahn, befinden sich auf der Containerbahn Wartungswege 4. Während die äusseren Wartungswege 4 zur Bedienung der äusseren Fahrspuren 2 dienen, ist der Mittlere zur Betreuung der beiden Überholspuren 3 bestimmt. Auf der Überdachung sowie an den Seitenwänden sind Solarzellen 5 angebracht, woraus die Containerbahn ihren Strom bezieht. Das Niederschlagswasser wird z B in unterirdischen Auffangbecken 6 gesammelt, welche sich aussen neben der Bahn in regelmässigen Abständen befinden und von hier aus weitergeleitet wird, oder direkt dem öffentlichen Wasserhaushalt zugeführt wird.

### Bilder 2-7

Die Bahn selbst besteht aus zwei T-förmigen (oder ähnlichen) miteinander verbundenen parallellaufenden Stahlträgersträngen 1, bestehend aus einzelnen durch Verbindungsplatten 1A (Bild 2A) aneinander verschraubten Segmenten, welche auf dem Tragkörper mit Verankerungsschrauben 2 befestigt sind und durch auswechselbare Abstandhalter 3 (nicht starr, zum Austausch beider) miteinander verbunden sind. In den Stahlträgern befinden sich von oben nach unten, Einschnitte 4 für die Einschiebeplatten 5 mit Lager 6, welche von den auf den Stahlträgern verschweissten (oder anders befestigten) Halterungsplatten 8 (siehe Schweissnaht 7 ) in Position gehalten werden. Durch die Lager hindurch läuft eine Achse 9, auf der ein Antriebsrad 10 und ein Elektromotor 11 montiert sind. Der Elektromotor 11 ist an der diesseitigen Einschiebeplatte 5 befestigt. So bildet das Ganze eine kompakte Antriebseinheit 12, welche sowohl rechtsseitig als auch linksseitig in die Einschnitte eingeschoben werden kann (siehe hierzu auch Bild 3). Auf den Stahlträgern sind Führungsrollen 13 zur Spurenführung der Container angebracht, welche auf den Halterungen 14 montiert sind. Auf die von den Elektromotoren 11 angetriebenen Antriebsräder 10 kommen die Plattformen 15 (Bild 7), auf denen sich die Container befinden, welche mit Drehverriegelungen (Twistlocks) an die Halterungen (corner-castings)16 (Bild 7) befestigt sind und von diesen Antriebsrädern fortbewegt werden. An den Seitenwänden 17 der Plattformen 15 laufen die Führungsrollen 14 zur Spurenführung. Die Plattformen haben eine Länge die den Containern der Norm TEU (20 Fußcontainer) entspricht und sind mit 8 corner-castings 16 versehen, damit man die Plattformen selbst zu zwei aneinander befestigen kann um so die FEU (40 Fußcontainer) transportieren zu können und die Containern daran zu befestigen. Die Antriebseinheiten 12 sind in solchen Abständen voneinander angebracht, dass sich bei Ausfall von einer oder auch gleichzeitig mehrerer Antriebseinheiten, unter dem kleinsten Container immer noch so viele Antriebseinheiten befinden, dass der Weitertransport garantiert bleibt (siehe Bild 4 und Bild 5).

Erklärung der Bezugszeichen auf den Bildern.

### Bild 1:

1. Doppelstrang
2. Fahrspur
3. Überholspur
4. Wartungswege
5. Solarzellen
6. Auffangbecken

### Bilder 2-7:

1. T-förmige Stahlträger
1A. Verbindugsplatten
2. Verankerungsschrauben
3. Abstandshalter
4. Einschnitte
5. Einschiebeplatten mit Lager
6. Lager
7. Schweissnaht
8. Aufgeschweisste Halterungsplatten
9. Achse
10. Antriebsrad
11. Elektromotor an der inneren Seite der Einschiebeplatte befestigt
12. Beidseitig austauschbare Antriebseinheit
13. Führungsrollen
14. Führungsrollenhalterungen
15. Plattform
16. Halterungen (corner-castings)
17. Seitenwände als Laufflächen für die Führungsrollen

## Patentansprüche

1. Verfahren zum Aufbauen einer Containerbahn für weltweit übliche Transportcontainer und zum Ferntransport der Container entlang einer langen, mindestens regionalweiten Strecke, gemäß folgender Verfahrensschritte:
a. Aufbauen eines langgestreckten, überdachten und ggf. mit Seitenwänden hallenartig ausgeführten Containerbahnrahmens (1, 3);
**gekennzeichnet durch**:
b. Bereitstellen einer Vielzahl von drehenden Antriebseinheiten (12) mit jeweils zwei als Einschiebeplatten (5) ausgebildeten Lagern **durch** die eine Achse (9) hindurch läuft;
c. Einschieben der Einschiebeplatten (5) in Einschnitte (4) des langgestreckten Containerbahnrahmens (1, 3) beidseitig der zu transportierenden Container;
d. Aufsetzen der Transportcontainer auf die Transportbahn zur Beförderung **durch** die drehenden Antriebseinheiten (12), wobei die Antriebseinheiten **durch** einen herannahenden Transportcontainer eingeschaltet und **durch** einen sich entfernenden Transportcontainer ausgeschaltet werden; und
wobei im Verfahrensschritt d. des Aufsetzens der Container diese zur Beförderung entweder unmittelbar auf mehrere der drehenden Antriebseinheiten (12) gesetzt, oder auf Förderplattformen (15) aufgebracht, und auf diesen auf der Containerbahn transportiert werden.

2. Verfahren gemäß dem Anspruch 1, wobei mindestens ein Transportcontainer über Stromabnehmer, die gegen am Dach oder seitwärts angebrachte elektrische Leitungen gleiten, mit Strom versorgt wird.

3. Containerbahn zum Ferntransport weltweit üblicher Transportcontainer, mit einem Containerbahnrahmen (1, 3), der sich entlang einer langen Strecke erstreckt zum mindestens regionalweiten Ferntransport der Container, wobei der Rahmen (1, 3) überdeckt und ggf. mit Seitenwänden hallenartig ausgeführt ist,
**dadurch gekennzeichnet, dass** eine Vielzahl von drehbaren Antriebseinheiten (12) entlang der Strecke hintereinander und parallel zueinander am Rahmen befestigt sind, wobei jede drehbare Antriebseinheit (12) zwei als Einschiebeplatten (5) ausgebildete Lager aufweist, die in Einschnitte (4) des Rahmens (1, 3) beidseits der zu transportierenden Container eingesetzt sind, und jede Antriebseinheit (12) eine Achse (9) aufweist, die durch die Einschiebeplatten (5) hindurch läuft und ein Antriebsrad (10) zum Antrieb der Container aufweist, auf das sich ein Container stützen kann und fahren kann, und dass die drehbaren Antriebseinheiten (12) über eine Steuereinrichtung durch einen herannahenden Container einzuschalten und durch einen sich entfernenden Container auszuschalten sind.

4. Containerbahn gemäß Anspruch 3, wobei der Rahmen (1, 3) einzelne vorzugsweise durch Verbindungsplatten (1A) aneinander befestigte vorzugsweise T-förmige Trägerelemente (1) und Abstandhalter (3) aufweist.

5. Containerbahn gemäß Anspruch 3, wobei jede drehbare Antriebseinheit (12) einen elektrischen Motor (11) aufweist, der vorzugsweise an einer der Einschiebeplatten (5) angeflanscht ist.

6. Containerbahn gemäß dem Anspruch 3, wobei die drehbaren Antriebseinheiten (12) derart ausgeführt sind, dass sie in eine erste oder eine zweite, um 180° umgedrehte, Position eingebaut werden können.

7. Containerbahn gemäß einem Anspruch 3, mit Solarzellen, die vorzugsweise auf dem Dach und/oder an den Seitenwände der Förderanlage angeordnet sind, zur Stromversorgung der drehbaren Antriebseinheiten (12).

8. Containerbahn gemäß Anspruch 3, mit zwei nebeneinanderlaufenden Fahrspuren (Bild 1: 2, 3), die in eine Richtung laufen, und zwei weiteren nebeneinanderlaufenden Fahrspuren (Bild 1: 2, 3), die parallel zu diesen in die entgegengesetzte Richtung laufen.

9. Containerbahn gemäß Anspruch 8, wobei ein Wartungsweg (Bild 1: 4) in der Mitte zwischen den zwei bzw. vier nebeneinanderlaufenden Fahrspuren (Bild 1: 2, 3) und/oder an der äußeren Seite einer jeweiligen äußeren Fahrspur (Bild 1: 2) vorgesehen ist.

## Claims

1. A method of building a container way for worldwide common transport containers and for the long-distance transport of the containers along a long distance on an at least regional scale in accordance with the following steps of:
a. Building an elongate, roofed and if applicable, provided with hall-like side walls, container way frame (1, 3) **characterized in**:
b. Providing a plurality of rotatable drive units (12), each with two bearings being provided as insertion plates (5) through which runs an axle (9);
c. Inserting the insertion plates (5) in the cutouts (4) of the elongate container way frame (1, 3) on both sides of the containers to be transported;
d. Placing the transport containers on the container way for conveyance by the rotatable drive units (12), wherein the drive units are activated by an approaching transport container and are disabled by a departing transport container; and
wherein in method step d. of placing the containers onto the container way, these are either directly placed on a plurality of the rotatable drive units (12) or on conveying platforms (15) on which they are transported on the container way.

2. The method in accordance with claim (1), wherein at least one transport container is supplied with electric power by current collectors which slide on the roof or laterally at electric lines.

3. The container way for the long distance transport of worldwide common transport containers, with a container way frame (1, 3), which extends along a long-distance for the transport of the containers on an at least regional scale, wherein the frame (1, 3) is covered and is, if applicable, provided with hall-like side walls,
**characterized in that** a plurality of rotatable drive units (12) is arranged back-to-back and in parallel to each other on the frame along the track, wherein each rotatable drive unit (12) is provided with two bearings provided as insertion plates (5) which are inserted into the cutouts (4) of the frame (1, 3) on both sides of the containers to be transported, and each drive unit (12) is provided with an axle (9) which runs through the insertion plates (5) and with a drive wheel (10) for driving the containers, on which the containers are supported and drive on, and **in that** the rotatable drive units (12) are activated by a control system by an approaching container and are disabled by a departing container.

4. The container way in accordance with claim 3, wherein the frame (1, 3) is provided with single preferably connected via connection plates (1A), preferably T-shaped support elements (1) and spacers (3).

5. The container way in accordance with claim 3, wherein each rotatable drive unit (12) is provided with an electric motor (11), which is preferably mounted to one of the insertion plates (5).

6. The container way in accordance with claim 3, wherein the rotatable drive units (12) are designed such that they can be applied in one direction or in the 180° reversed direction.

7. The container way in accordance with claim 3, provided with solar cells, which are preferably mounted onto the roof and/or the side walls of the conveying system, for supplying the rotatable drive units (12) with electric power.

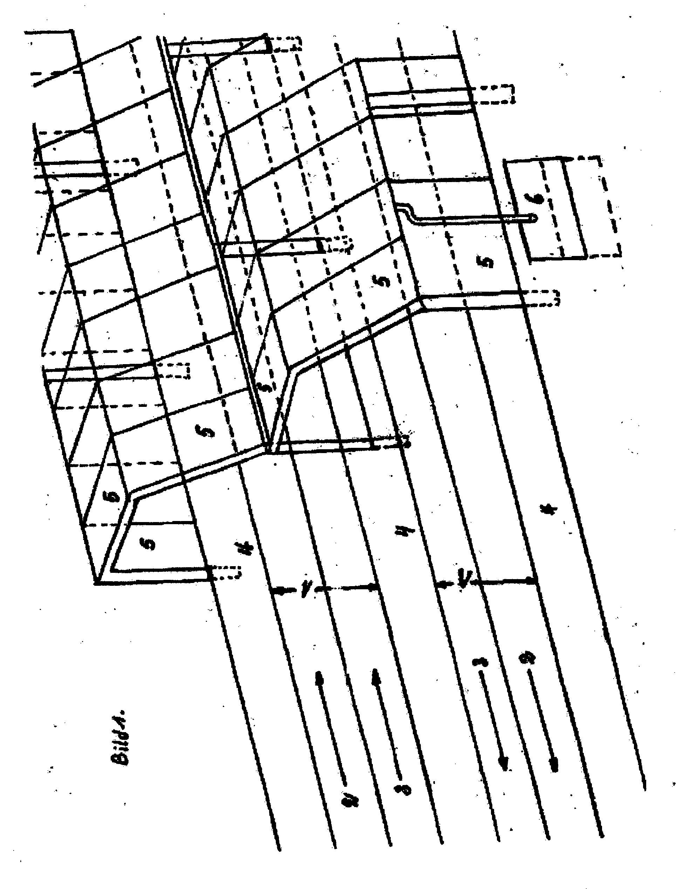

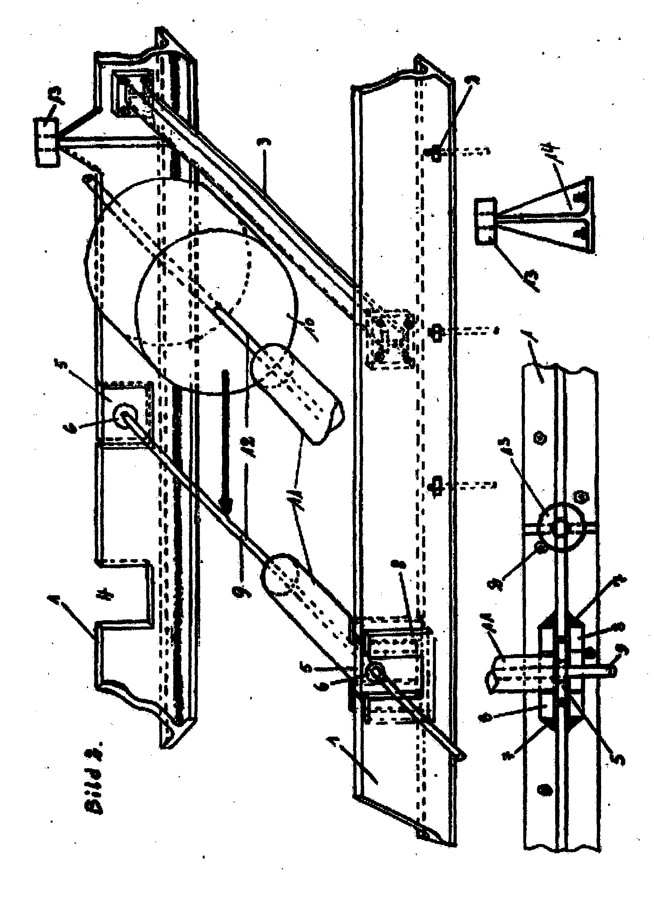

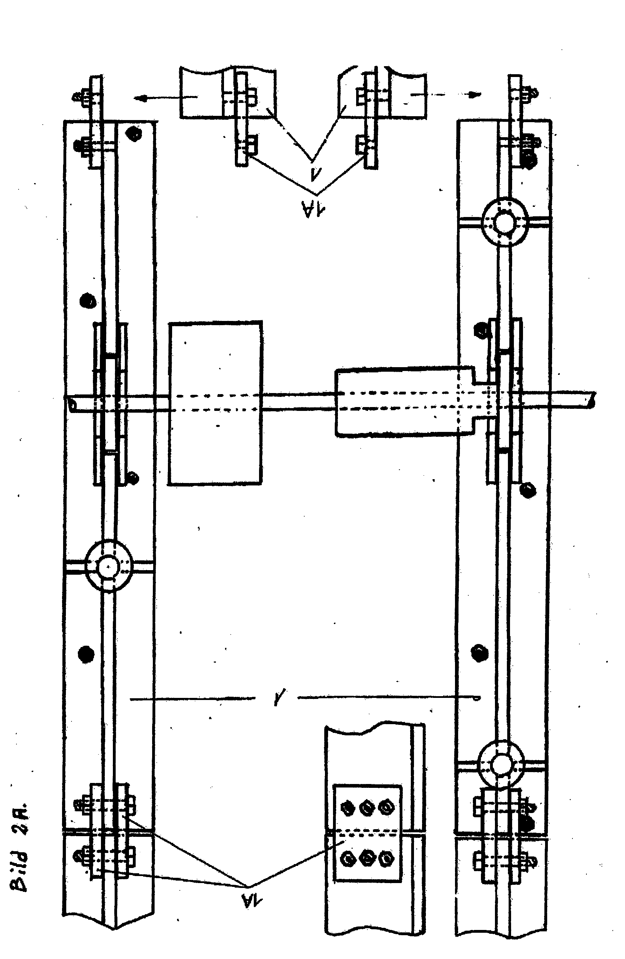

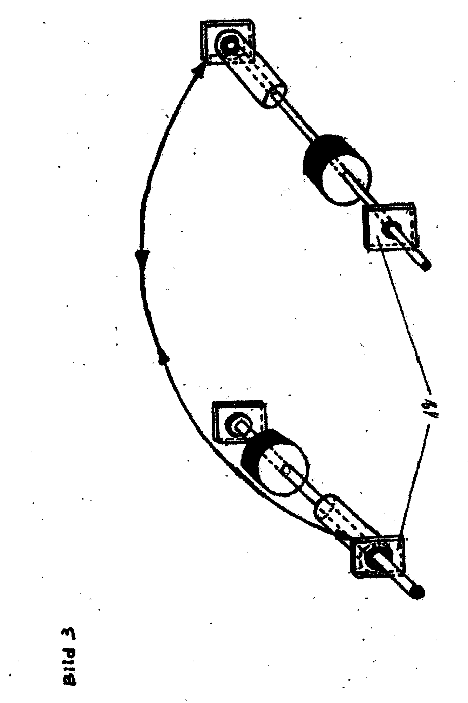

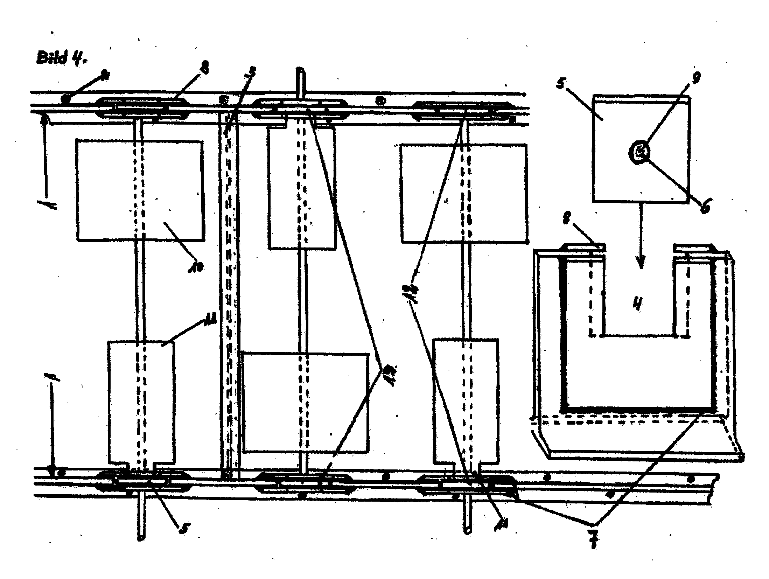

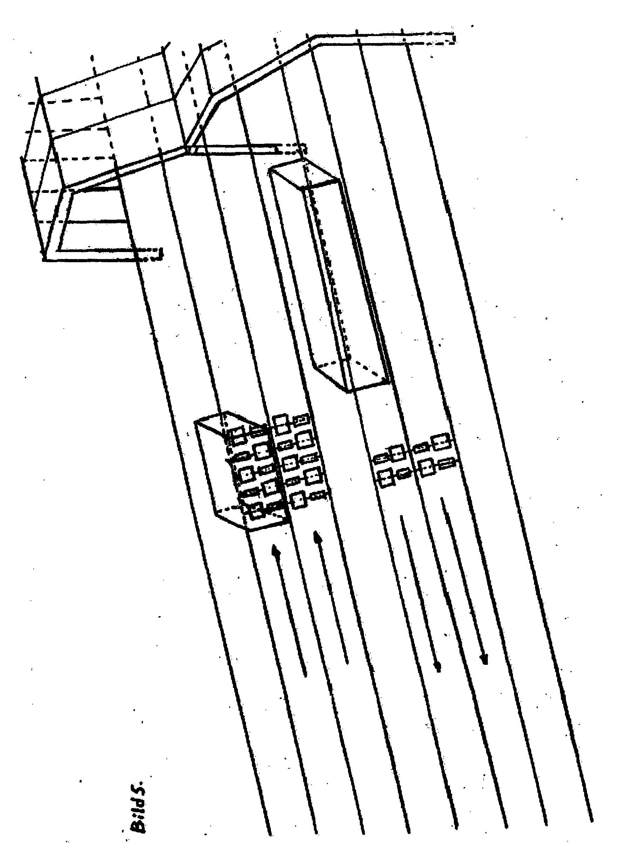

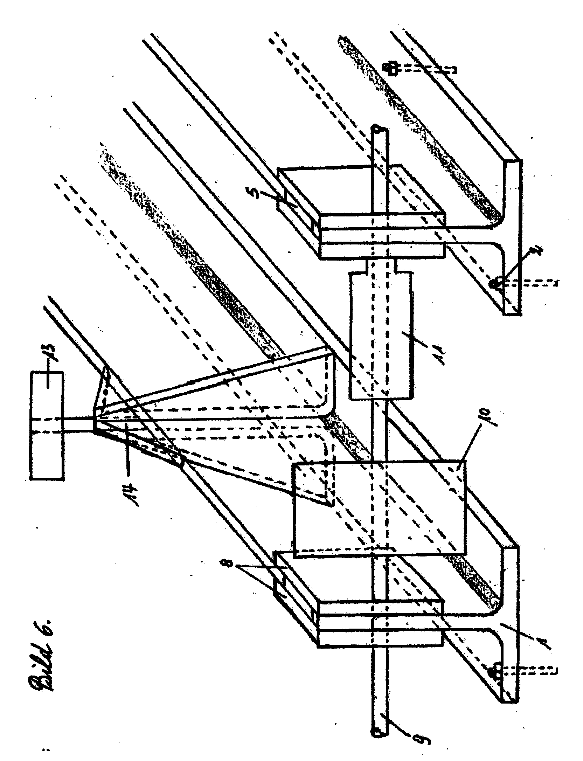

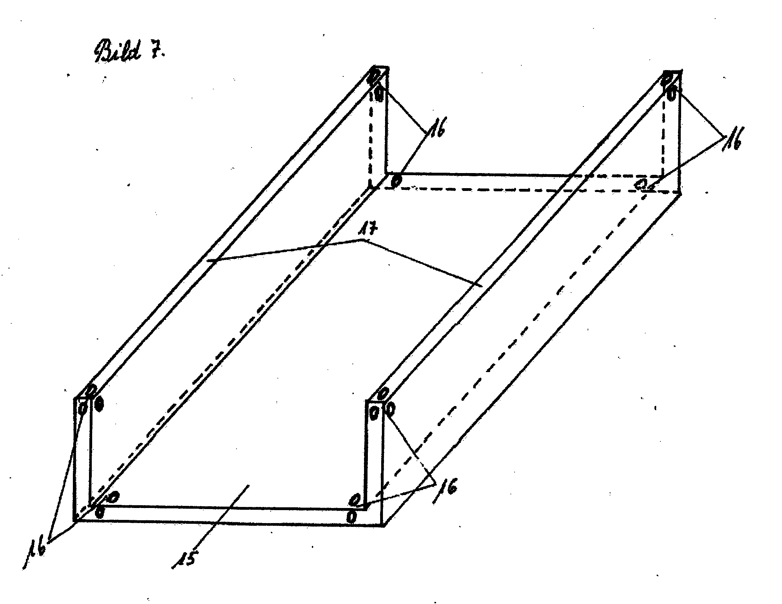

8. The container way in accordance with claim 3, provided with two collateral driving lanes (figure 1: 2, 3) whereas both lanes are directed to one direction and with two further collateral driving lanes (figure 1: 2, 3) which lead in parallel to the opposite direction.

9. The container way in accordance with claim 8, wherein a maintenance lane (figure 1: 4) is provided in the center between the two, respectively four, collateral driving lanes (figure 1: 2, 3) and/or at the outer side of the outer driving lane (figure 1: 2).

## Revendications

1. Méthode de construction d'une voie de transport de conteneurs pour des conteneurs de fret courants à l'échelle mondiale et pour le transport sur longue distance des conteneurs le long d'un long parcours au moins au niveau régional, selon les étapes suivantes :
a. construction d'une ossature (1, 3) de la voie de transport de conteneurs, l'ossature s'étirant sur une longe distance, couverte par un toit et, préférentiellement pourvue de parois latérales, à la façon d'une halle ;
**caractérisée par** :
b. préparation d'une pluralité d'unités rotatives de propulsion (12), chacune avec deux paliers en forme de plaque à insérer (5) au travers desquels un axe (9) s'étend ;
c. insertion des plaques à insérer dans des découpes (4) prévues dans l'ossature (1, 3) de la voie de transport pour conteneurs de chaque coté du conteneur à transporter ;
d. dépose des conteneurs de fret sur la voie de transport pour un déplacement au moyen des unités rotatives de propulsion (12), les unités de propulsion étant mises en marche par un container s'en rapprochant et étant mises hors de marche par un conteneur s'en éloignant ; et
où dans l'étape d de dépose des conteneurs, ceux-ci sont déposés soit directement sur plusieurs des unités rotatives de propulsion (12) ou sur des plateformes de transport (15) sur lesquelles les conteneurs sont transportés sur la voie de transport de conteneurs.

2. Méthode selon la revendication 1, où au moins un des conteneurs de transport est alimenté en courant électrique via des récepteurs de courant électrique glissant sur des conducteurs électriques aménagés sur le toit ou sur le coté.

3. Voie de transport de conteneurs pour le transport sur longue distance de conteneurs de fret courants au niveau mondial, avec une ossature (1, 3) de voie de transport s'étendant le long d'un long parcours pour le transport de conteneurs sur longue distance, au moins au niveau régional, l'ossature (1, 3) étant couverte par un toit ou, préférentiellement pourvue de parois latérales, à la manière d'une halle,
**caractérisée en ce que** une pluralité d'unités rotatives de propulsion (12) est fixée à l'ossature le long du parcours, l'une après l'autre et parallèles les unes aux autres, chaque unité rotative de propulsion (12) comprenant deux paliers en forme de plaques à insérer (5) qui sont insérées dans des découpes (4) de l'ossature (1, 3) de chaque coté du conteneur à transporter, et chaque unité de propulsion (12) comprenant un axe (9) s'étendant au travers des plaques à insérer (5) et une roue de propulsion (10) pour le déplacement des conteneurs et sur laquelle un conteneur peut s'appuyer et rouler, et les unités rotatives de propulsion (12) via un dispositif de contrôle sont mises en marche par un conteneur s'en approchant et mises hors de marche par un conteneur s'en éloignant.

4. Voie de transport de conteneurs selon la revendication 3, où l'ossature (1, 3) comprend des poutres (1) préférentiellement en forme de T fixées entre elles, préférentiellement par des plaques de liaison (1A), et des entretoises (3).

5. Voie de transport de conteneurs selon la revendication 3, où chaque unité rotative de propulsion (12) comprend un moteur électrique (11), préférentiellement fixé par bridage à une des plaques à insérer (5).

6. Voie de transport de conteneurs selon la revendication 3, où les unités rotatives de propulsion (12) sont construites de sorte à ce qu'elles puissent être montées dans une première position ou une seconde position à 180° de la première.

7. Voie de transport de conteneurs selon la revendication 3, comprenant des capteurs solaires montés préférentiellement sur le toit et/ou sur les parois latérales de la voie de transport en vue de l'alimentation des unités rotatives de propulsion (12).

8. Voie de transport de conteneurs selon la revendication 3, comprenant deux premières voies de roulage agencées l'une à coté de l'autre (figure 1 : 2, 3) et deux secondes voies de roulage agencées l'une à coté de l'autre (figure 1 : 2, 3) parallèles aux premières voies et roulant dans une direction opposée.

9. Voie de transport de conteneurs selon la revendication 8, où une voie d'entretien (figure 1 : 4) est aménagée au milieu entre les deux ou quatre voies de roulage agencées parallèlement (figure 1 : 2, 3) et/ou à l'extérieur d'une voie de roulage extérieure (figure 1 : 2).
